Europäisches Patentamt

European Patent Office

Office européen des brevets

(11) Veröffentlichungsnummer: **0 208 924**
**A2**

(12) **EUROPÄISCHE PATENTANMELDUNG**

(21) Anmeldenummer: **86108101.6**

(22) Anmeldetag: **13.06.86**

(51) Int. Cl.⁴: **H02G 3/04**

(30) Priorität: **13.07.85 DE 8520266 U**

(43) Veröffentlichungstag der Anmeldung:
**21.01.87 Patentblatt 87/04**

(84) Benannte Vertragsstaaten:
**AT BE CH DE FR GB IT LI NL**

(71) Anmelder: **Firma Manfred DAHL GmbH & Co KG**
**Nussbaumweg 25**
**D-5064 Rösrath(DE)**

(72) Erfinder: **Heger, Gerd Wolfgang**
**Überhöferfeld 40**
**D-5064 Rösrath(DE)**

(74) Vertreter: **Bauer, Wulf, Dr.**
**Wolfgang-Müller-Strasse 12**
**D-5000 Köln 51 (Marienburg)(DE)**

(54) **Kabelkanal mit Ausnehmungen zur Aufnahme einer Klammer.**

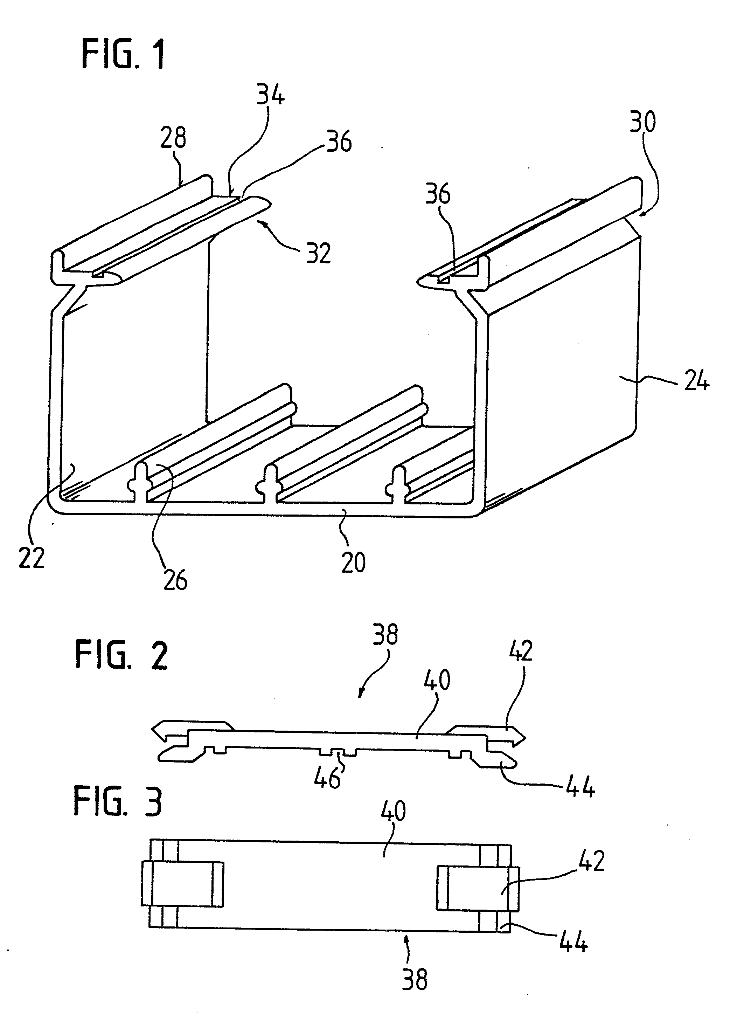

㋗ Der Kabelkanal hat ein im Profil U-förmiges Kanalunterteil, das aus einer Basis (20) und zwei seitlichen Schenkeln (22, 24) besteht. Von letzteren springt in Nähe der jeweiligen freien Enden (28) je eine Leiste (32) nach innen, in der Leiste (32) sind Ausnehmungen zur Aufnahme einer Klammer vorgesehen. Diese Ausnehmungen sind als eine kontinuierliche, beim Extrudieren hergestellte Nut (36) ausgebildet (Fig. 1).

FIG. 1

EP 0 208 924 A2

## Kabelkanal mit Ausnehmungen zur Aufnahme einer Klammer

Die Erfindung bezieht sich auf einen Kabelkanal mit einem im Profil U-förmigen Unterteil, bestehend aus einer Basis und zwei seitlichen Schenkeln, von denen in Nähe ihrer freien Enden Leisten nach Innen und im wesentlichen parallel zur Basis vorspringen, in denen Ausnehmungen zur Aufnahme einer Klammer vorgesehen sind.

Kabelkanäle dieser Art sind beispielsweise aus dem Prospekt "Die Leitungsführungskanäle" der Anmelderin bekannt, sie werden als Leitungsführungs-und Gerätekanal LKO bezeichnet. Sie bestehen aus einem im Profil U-förmigen Unterteil und einem im wesentlichen flachen Deckel sowie einer Vielzahl von Zubehörteilen, insbesondere Klammern, die im Unterteil befindliche Kabel übergreifen und damit verhindern, daß diese Kabel aus dem Unterteil herauskommen, insbesondere herausfallen können. Die Klammern haben hierzu an ihren Längsenden Haltenasen, die mit parallel vorspringenden Gegenarmen einen Klips bilden. Bei dem bekannten Leitungsführungs-und Gerätekanal LKO sind in den Leisten des Unterteils Langlöcher eingestanzt, in die die Haltenasen der Klammern formschlüssig eingreifen können. Für das Einsetzen der Klammer wird die Elastizität des Klammermaterials genutzt, die Haltenase wird vom Gegenarm weggedrückt und schnappt in eine der in gleichen Abständen vorgesehenen Ausstanzungen ein. Mittels eines Werkzeuges kann sie wieder gelöst werden.

Der Kabelkanal, also insbesondere das hier interessierende Unterteil, wird im Extrusionsverfahren aus Kunststoff, beispielsweise PVC, hergestellt. Die Ausnehmungen der Leisten in Form von länglichen, durchgehenden Löchern werden nach der Extrusion mittels geeigneter Werkzeuge gestanzt. Die Fertigung des Unterteils ist damit im wesentlichen von der Geschwindigkeit und der Sicherheit des Stanzvorgangs abhängig. Dies ist nachteilig, denn der Stanzvorgang läßt sich nur mit großem Aufwand mit der gleichen Geschwindigkeit durchführen wie die Extrusion. Darüberhinaus sind die möglichen Positionen einer Klammer durch den Ort der Ausstanzungen festgelegt. Nach dem Ablängen des extrudierten Profils, insbesondere dem Zuschnitt relativ kurzer Profilstücke, tritt daher das Problem auf, daß die Klammer nicht an dem Ort untergebracht werden kann, wo sie günstig wäre. Insbesondere ist der Abstand einer Klammer zu einer Schnittfläche vom Abstand des Schnittes von den nächstgelegenen Ausstanzungen abhängig, dabei kann es auftreten, daß eine Klammer relativ nah oder unglücklich weit von einer Schnittfläche entfernt ist. Schließlich tritt der Nachteil auf, daß sich die Ausstanzungen für Klammern dort befinden, wo ein anderes Zubehörteil, beispielsweise eine Gerätedose, in das Unterteil eingesetzt werden soll. An Stellen, an denen sich eine Gerätedose befindet, verbietet sich der Einsatz einer Klammer.

In das Unterteil eingesetzte Klammern haben den Vorteil, daß sie den Abstand zwischen den freien Enden der seitlichen Schenkel des Unterteils fixieren. Hierdurch wird dieses ausgesteift und ein Abziehen des Deckels vom Unterteil erschwert.

Ausgehend von dem Kabelkanal der eingangs genannten Art liegt der Erfindung die Aufgabe zugrunde, die genannten Nachteile dieses Kabelkanals zu vermeiden und den Kabelkanal unter Beibehaltung seiner Vorteile dahingehend weiterzuentwickeln, daß eine Stanzung von Ausnehmungen nicht mehr erforderlich ist und die Fertigung des Unterteils lediglich von der Laufgeschwindigkeit des Profils bei der Extrusion bestimmt ist.

Diese Aufgabe wird ausgehend von dem Kabelkanal der eingangs genannten Art dadurch gelöst, daß die Ausnehmungen als eine kontinuierliche Nut ausgebildet sind. In kinematischer Umkehr kann anstelle einer Nut auch ein Wulst vorgesehen sein.

Erfindungsgemäß werden die zur formschlüssigen Aufnahme der Haltenasen der Klammern vorgesehenen Ausnehmungen also nun nicht mehr in Form einzelner, genau gegenüberliegender und in gleichen Abständen angeordneter, gestanzter Langlöcher von im wesentlichen der Breite der Haltenasen ausgeführt, sondern als kontinuierlich durchlaufende Rillen oder Rippen, die unmittelbar beim Extrusionsvorgang miterstellt werden und somit Teil des extrudierten Profils des Unterteils sind. In diese Nut rastet die Haltenase einer Klammer ebenso ein wie in ein gestanztes Langloch. Jedoch ist nunmehr der Ort, an dem eine Klammer befestigt werden kann, nicht mehr lokal vorgegeben, vielmehr können Klammern an beliebiger Stelle und in beliebigen Abständen eingesetzt werden.

Ein wichtiger Vorteil liegt im Wegfall der Stanzwerkzeuge. Der Stanzvorgang von Langlöchern bereitet stets Probleme, die einerseits in den Stanzwerkzeugen selbst, andererseits aber auch in der Zuordnung der Stanzwerkzeuge zum extrudierten Profil liegen. Diese Nachteile fallen nun völlig weg.

Eine in ein erfindungsgemäßes Unterteil eingesetzte Klammer kann in Längsrichtung des Unterteils verschoben werden, dies ist für die Montage häufig vorteilhaft. So kann man sich den jeweiligen örtlichen Notwendigkeiten, insbesondere dem Verlauf der Kabel besser anpassen und sicherstellen, daß die Kabel innerhalb des Profils des Unterteils bleiben.

In vorteilhafter Weiterbildung de8r Erfindung wird vorgeschlagen, die Nut (bzw. die Rippe) auf der Außenseite der Leiste vorzusehen. Hierdurch wird zwar nicht das Einsetzen der Klammer, wohl aber ein späteres Entfernen der Klammer deutlich vereinfacht. Zudem können bei geeigneter Ausbildung einer Nut dieselben Klammern verwendet werden, wie sie für die gelochten Ausnehmungen im Stanzverfahren bereist verwendet werden.

Da die Klammern erfindungsgemäß an beliebiger Stelle zwischen den beiden Leisten des Unterteils eingesetzt werden können, kann die Gefahr auftreten, daß die Klammern nicht rechtwinklig zur Längsrichtung des Unterteils verlaufen. Dies war bei den vorbekannten Ausnehmungen in Form von Stanzlöchern ausgeschlossen, da die Stanzlöcher relativ kurz waren und ein Schrägstellen der Klammer somit praktisch ausgeschlossen war. Vorausgesetzt ist hierbei jedoch, daß die gestanzten Löcher exakt einander gegenüberlagen, der Stanzvorgang mußte entsprechend gesteuert und durchgeführt werden.

Bei der erfindungsgemäßen Ausnehmung in Form einer Nut (oder einer Rippe) kann man eine unzulässige Schrägstellung der Klammer durch eine Reihe von Maßnahmen vermeiden: Einerseits kann die Haltenase, die in die Nut federnd einrastet (oder über eine Rippe springt und hinter dieser zurückfedert) ausreichend breit (in Längsrichtung des Unterteils gesehen) ausgebildet werden, wodurch eine Schrägstellung sehr eingegrenzt ist. Andererseits kann die Nut in ihrem Profil weitgehend dem Profil der Haltenase angepaßt werden, so daß ein Verdrehen der Klammer aus einer Lage exakt rechtwinklig zur Längsrichtung des Unterteils einen zunehmend ansteigenden Kraftaufwand erfordert und die Klammer weitgehend durch diese Rückstellkraft selbsttätig die orthogonale Position einnimmt. Die Rückstellkraft wird hierbei durch Aufspreizen der Klammer erzeugt.

Die für eine Verschiebung einer in ein Unterteil eingesetzten Klammer in Längsrichtung des Unterteils notwendige Kraft kann in weiten Grenzen dadurch vorbestimmt werden, daß die Materialstärke unterhalb der Nut (bzw. hinter der Rippe) auf die Federkraft der Klammer im Bereich der Haltenase und den Abstand von Haltenase und Gegenarm abgestimmt ist. So kann beispielsweise erreicht werden, daß die Haltenase entweder nahezu kräftefrei auf dem Boden der Nut aufliegt oder auf den Boden der Nut preßt. Im letzteren Fall ist eine Verschiebung deutlich erschwert.

Weitere Vorteile und Merkmale der Erfindung ergeben sich aus den übrigen Ansprüchen sowie der nun folgenden Beschreibung eines speziellen, nicht einschränkend zu verstehenden Ausführungsbeispiels, das unter Bezugnahme auf die Zeichnung im folgenden näher erläutert wird. In dieser zeigen:

Fig. 1 eine perspektivische Darstellung eines Unterteils eines Kabelkanals,

Fig. 2 eine Seitenansicht einer an sich bekannten Klammer und

Fig. 3 eine Draufsicht auf die Klammer gemäß Figur 2.

Das in Figur 1 gezeigte Unterteil eines Kabelkanals ist an sich bekannt, so daß hier eine kurze Beschreibung genügt. Das Unterteil hat eine Basis 20, an der einstückig zwei seitliche Schenkel 22, 24 in gleicher Richtung in einen Winkel etwas größer als 90° wegspringen. In gleicher Richtung springen von der Basis drei Messerleisten 26 vor, sie sind für den Halt von Zubehörteilen wie Gerätedose, Trennleiste usw. vorgesehen. Im Bereich ihrer freien Enden 28 verspringen die Schenkel 22, 24 in einer V-förmigen Einkehlung 30 nach innen. In diese Einkehlungen 30 greift ein hier nicht gezeigter, im wesentlichen C-förmiger, flacher Deckel formschlüssig ein.

In unmittelbarer Nähe der freien Enden 28 und im Bereich der Einkehlungen 30 springen im wesentlichen parallel zur Basis 20 Leisten 32 mehrere Millimeter, beispielsweise zehn Millimeter nach Innen vor. Sie haben an ihrer Oberseite 34 jeweils eine Nut 36 mit 1,5 Millimeter Tiefe und drei Millimeter Breite. Die Leisten 32 laufen nach Innen hin dünner werdend und rund aus, um den Einsatz der im folgenden beschriebenen Klammern zu erleichtern.

Die Klammern 38 haben einen im wesentlichen quadratischen Körper 40, der etwa zwanzig Millimeter breit und drei Millimeter dick ist. Ihre Länge richtet sich nach dem Abstand der Leisten 32. Vom Körper 40 springt oben jeweils eine Haltenase 42 mit im Profil dreieckförmiger Nase (sie he Figur 2) vor, die in eine Nut 36 einrasten kann. Weiterhin springt am Körper 40 und der Haltenase 42 gegenüberliegend ein Gegenarm 44 vor, der mit der Haltenase 42 einen Klips bildet. Beide haben - schräg verlaufende Einlaufflächen, um ein Aufschieben auf die Leiste 32 zu erleichtern.

Beim Einsetzen der Klammer 38 werden zunächst die Schenkel 22, 24 gespreizt, die Klammer 38 kann nun eingesetzt werden, sie hält sich dabei selbsttätig in einer Vorposition, die noch nicht der endgültigen Montageposition entspricht und die für vorübergehende Montagearbeiten vorteilhaft ist. Erst ein Druck der beiden Schenkel 22, 24 gegeneinander zwingt die Leisten 32 tiefer zwischen Haltenase 42 und Gegenarm 44, bis die Haltenase 42 in die Nut 36 einrastet. Danach ist ein weiteres Zusammenpressen der Schenkel 22, 24 möglich, es wird aber im weiteren Verlauf dadurch behindert, daß die Vorderkanten der Leisten 32 an die Enden des Körpers 40 anschlagen.

Die Klammer kann dadurch wieder demontiert werden, daß mit einem Werkzeug, beispielsweise einem Schraubendreher, die Haltenase 42 angehoben und aus der Nut 36 gedrückt wird. Die Klammern können aber auch in Längsrichtung aus dem Unterteil herausgeschoben werden.

Anstelle einer im Profil rechteckförmigen Nut 36 kann eine andere Profilform, beispielsweise Dreieckform, gewählt werden. Es ist insbesondere vorteilhaft, die Profilform der Nut 36 derjenigen der Nase anzupassen. Im gezeigten Ausführungsbeispiel hieße dies, der Nut 36 eine Sägezahnform zu geben. Für den Halt der Klammer im Unterteil ist ohnehin nur die jeweils innere, rechtwinklig zur Oberseite 34 verlaufende Flanke der Nut 36 entscheidend.

Wird anstelle einer Nut in der Leiste 32 eine Rippe vorgesehen, so kann auf eine vorspringende Nase an der Klammer verzichtet werden, da nunmehr in der Klammer die Nut vorzusehen ist. Will man beispielsweise das gezeigte Ausführungsbeispiel in diesem Sinne abwandeln, so wird auf der Oberseite 36 der Leiste 32 eine Rippe vorgesehen, die im Profil sägezahnförmig ist. Ausgehend vom freien Ende der Leiste 32 zum zugehörigen Schenkel 22 bzw. 24 hin steigt die Rippe im flachen Winkel an, sie fällt dann rechtwinklig zur Oberseite 34 ab. Entsprechend ist eine Nut in der Klammer 38 mit Sägezahnform vorgesehen. Dieselbe Anordnung kann auf der Unterseite der Leiste oder zusätzlich auf der Unterseite der Leiste vorgesehen sein.

In bekannter Weise hat die Klammer 38 Führungsbuchten 46 für Trennleisten (nicht dargestellt).

Im gezeigten Ausführungsbeispiel sind die Haltenasen 42 der Klammer 38 etwa zehn Millimeter breit. Dieser Wert hat sich in der Praxis gut bewährt. Breitere Haltenasen 42 haben den Vorteil, einer Schrägstellung der Klammern 38 stärker entgegenzuwirken.

Vorzugsweise ist der Boden und/oder mindestens eine Seitenwand und bevorzugt die dem freien Ende der Leiste 32 zugewandte Seite der Nut 38 aufgerauht, z. b. geriffelt oder mit einem Mikro-Sägezahnprofil versehen. Entsprechend sind die zusammenwirkenden Flächen der Haltenase 42 ausgebildet. Die Aufrauhungen verlaufen entweder in Längsrichtung des Kabelkanals, um wie die Nut 36 selbst beim Extrudieren direkt hergestellt werden zu können, oder die Riffelungen verlaufen quer zur Längsrichtung, um eine Verschiebung der Klammer 38 zu erschweren.

Vorgezogen wird ein hinterschnittener beispielsweise schräger oder gestufter Verlauf der dem freien Ende der Leiste 32 zugewandten (inneren) Seitenfläche der Nut 36, so daß die beiden Seitenflächen jeder Leiste in Verlängerung ein V bilden, dessen Spitze im Bereich der Basis oder tiefer liegt. Die Haltenasen 42 sind entsprechend ausgebildet. Aufgrund eines schrägverlaufenden Hinterschnitts wird die Klammer 38 in die Nut 36 hineingezogen. Ein abgestufter Hinterschnitt bewirkt einen Formschluß zwischen Klammer 38 und Nut im Sinne eines Einklipsens. Vorteilhaft ist, wenn der Winkel des Hinterschnitts größer ist als der Winkel der Selbsthemmung des verwendeten Materials, so daß ein selbständiges Hochbewegen der Klammern 38 ausgeschlossen ist.

Die Haltenase 42 haben einen Abstand, der 3 % bis 10 % kleiner ist als der Abstand der beiden Nuten 36 im entlasteten (freien) Zustand des Unterteils.

## Ansprüche

1. Kabelkanal mit einem im Profil U-förmigen Unterteil, bestehend aus einer Basis (20) und zwei seitlichen Schenkeln (22, 24), von denen in Nähe ihrer freien Enden (28) Leisten (32) nach innen und im wesentlichen parallel zur Basis (20) vorspringen, in denen Ausnehmungen zur Aufnahme einer Klammer (38) vorgesehen sind,

dadurch gekennzeichnet, daß die Ausnehmungen als eine kontinuierliche Nut (36) ausgebildet sind.

2. Kabelkanal nach Anspruch 1, dadurch gekennzeichnet, daß die Nut (36) auf der Oberseite (34) der Leiste (32) vorgesehen ist.

3. Kabelkanal nach Anspruch 1 oder 2, dadurch gekennzeichnet, daß die Nut (36) im Querschnitt rechteckförmig ist.

4. Kabelkanal nach Anspruch 1 oder 2, dadurch gekennzeichnet, daß die Nut (36) einen der Klammer (38) angepaßten Querschnitt, insbesondere einen sägezahnförmigen Querschnitt aufweist.

5. Kabelkanal nach einem der Ansprüche 1 bis 4, dadurch gekennzeichnet, daß die Materialstärke der Leiste (32) unterhalb der Nut (36) kleiner, gleich oder größer ist als der Abstand von Haltenase (42) und Gegenarm (44) der Klammer (38) im entspannten Zustand.

6. Kabelkanal nach einem der Ansprüche 1 bis 5, dadurch gekennzeichnet, daß die Haltenase (42) mindestens zehn Millimeter, vorzugsweise fünfzehn Millimeter breit ist.

7. Kabelkanal nach einem der Ansprüche 1 bis 6, dadurch gekennzeichnet, daß der Boden und/oder die Seitenwände der Nut (36) aufgerauht, z. B. geriffelt sind und daß entsprechende Flächen der Haltenase (42) aufgerauht sind.

8. Kabelkanal nach einem der Ansprüche 1 bis 7, dadurch gekennzeichnet, daß die dem freien Ende der Leiste (32) zugewandte Seitenfläche der Nut (36) einen schrägen, hinterschnittenen Verlauf hat.

9. Kabelkanal nach einem der Ansprüche 1 bis 8, dadurch gekennzeichnet, daß im entlasteten, freien Zustand der Abstand der beiden Nuten (36) eines Unterteils um vorzugsweise 3% bis 10% größer ist als der Abstand der Haltenasen (42) der Klammer (38).

FIG. 1

34

28

36

32

30

36

24

22

26

20

FIG. 2

38

42

40

44

46

FIG. 3

40

42

44

38